(19) Europäisches Patentamt
European Patent Office
Office européen des brevets

(11) **EP 2 784 553 A2**

(12) **EUROPEAN PATENT APPLICATION**

(43) Date of publication:
**01.10.2014 Bulletin 2014/40**

(51) Int Cl.:
***G01V 1/36*** (2006.01)

(21) Application number: **14161220.0**

(22) Date of filing: **24.03.2014**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br><br>(30) Priority: **26.03.2013 US 201361805268 P<br>03.04.2013 US 201361807956 P**<br><br>(71) Applicant: **CGG Services SA<br>91300 Massy (FR)** | (72) Inventors:<br>• **Svay, Julie<br>91300 MASSY (FR)**<br>• **Sedova, Anna<br>91300 MASSY (FR)**<br>• **Bousquie, Nicolas<br>91300 MASSY (FR)**<br><br>(74) Representative: **Regimbeau<br>20, rue de Chazelles<br>75847 Paris Cedex 17 (FR)** |

(54) **Predicting sensitivity to positioning for seismic surveys**

(57)    A geophysical target-oriented approach is proposed to derive seismic sensitivity to 4D positioning mismatches, which focuses on the impact on the reflective response from the reservoir. The sensitivity indicators provide information about the seismic impact, in terms of reservoir imaging, of a surface positioning mismatch. Some embodiments capitalize on the use of legacy data, enabling a fasttrack analysis to be carried out on the velocity model to extract trends and mapping of lateral geological variability.

# FIG. 4

400

402 Assessing a lateral variability associated with the area

404 Generating at least one sensitivity indicator based on the lateral variability

EP 2 784 553 A2

Description

RELATED APPLICATIONS

The present application is related to, and claims priority from U.S. Provisional Patent Application No. 61/805,268, filed March 26, 2013, entitled "SENSITIVITY ANALYSIS TO POSITIONING FROM GEOLOGICAL VARIABILITY," to Julie SVAY and Anna SEDOVA, the disclosure of which is incorporated herein by reference, and to U.S. Provisional Patent Application No. 61/807,956, filed April 3, 2013, entitled "QUALITATIVE SENSITIVITY ANALYSIS POSITIONING FROM GEOLOGICAL VARIABILITY," to Nicolas BOUSQUIE, the disclosure of which is also incorporated herein by reference.

TECHNICAL FIELD

Embodiments of the subject matter disclosed herein generally relate to methods and systems for seismic data processing and, more particularly, to mechanisms and techniques for predicting the impact on a seismic survey of surface positioning mismatches of seismic sources and/or receivers.

BACKGROUND

Seismic data acquisition and processing techniques are used to generate a profile (image) of a geophysical structure (subsurface) of the strata underlying the land surface or seafloor. Among other things, seismic data acquisition involves the generation of acoustic waves and the collection of reflected/refracted versions of those acoustic waves to generate the image. This image does not necessarily provide an accurate location for oil and gas reservoirs, but it may suggest, to those trained in the field, the presence or absence of oil and/or gas reservoirs. Thus, providing an improved image of the subsurface in a shorter period of time is an ongoing area of research in the field of seismic surveying.

In addition to providing improved seismic images of a subsurface, it is also important to be able to perform surveys with a high degree of repeatability in order to provide high quality 4D seismic surveys. As will be appreciated by those skilled in the art, 4D seismic surveying refers to the technique of taking one seismic survey of a particular geographical area at a first time (i.e., the baseline survey) and another seismic survey of the same geographical area at a later time (i.e., the monitor survey). The baseline survey and the monitor survey can then be compared for various purposes, e.g., to observe changes in the hydrocarbon deposits in a geographical area which has an active well operating therein. Different seismic surveys performed at different times for the same geographical area are also sometimes referred to as different "vintages". In order for the comparison to be meaningful it is, therefore, important that the surveys be performed in a manner which is highly repeatable, i.e., such that the monitor survey is performed in much the same way (e.g., position of sources and receivers relative to the geography) as the baseline survey was performed.

To address this issue, various information can be developed to assist seismic surveying systems to perform surveys that are highly repeatable. Such information can be used to enhance navigation and seismic survey planning by providing, for example, the capability to locate portions of the survey area where positioning accuracy is most critical. For example, such information can be used to locate sensitive areas within the survey boundaries which require tighter positioning control (e.g., areas with strong currents) versus quieter areas where positioning accuracy can be relaxed.

The survey area could have many locations where proper source and receiver positioning is critical to producing seismic maps of acceptable quality. Thus there is also the difficulty in this context of performing too much processing to achieve little or no improvement or, alternatively, performing too little processing and failing to achievable measurable improvements.

Accordingly, it would be desirable to provide seismic data processing systems and methods which balance the costs of such analysis, e.g., in terms of time and resources, with the improvement afforded by precise placement or positioning of sources and receivers in a seismic survey.

SUMMARY

These, and other, issues are addressed by embodiments described herein which provide, among other things, a geophysical target-oriented approach which derives seismic sensitivity to 4D positioning mismatches, and which focuses on the impact of positioning on the reflective response from the reservoir being imaged. The sensitivity indicators generated by embodiments provide, for example, information about the seismic impact, in terms of reservoir imaging, of a surface positioning mismatch.

According to an embodiment, a method for generating at least one sensitivity indicator associated with an impact on a seismic survey of a positioning mismatch in an area includes the steps of assessing a lateral variability associated with the area; and generating the at least one sensitivity indicator based on the lateral variability.

According to another embodiment, a system for generating at least one sensitivity indicator associated with an impact on a seismic survey of a positioning mismatch in an area includes at least one processor configured to assess a lateral variability associated with the area and to generate the at least one sensitivity indicator based on the lateral variability.

According to another embodiment, a method for generating a map associated with an impact on a seismic survey of positioning mismatches in an area, includes the steps of assessing a lateral variability associated with the area, generating a plurality of sensitivity indicators based on the lateral variability, each of which is associated with a different portion of the area, and mapping the plurality of sensitivity indicators across the area to indicate geographical sensitivities to positioning mismatches.

## BRIEF DESCRIPTION OF THE DRAWINGS

The accompanying drawings, which are incorporated in and constitute a part of the specification, illustrate one or more embodiments and, together with the description, explain these embodiments. In the drawings:

Figure 1 illustrates a portion of a marine seismic survey system;
Figure 2 depicts an overall, generalized method for seismic exploration;
Figure 3 depicts examples of ray tracing for normal incidence reflection;
Figures 4-5 depict flowcharts of method embodiments;
Figure 6 illustrates points associated with neighboring traces and their use to calculate parameters associated with lateral variability according to an embodiment; and
Figure 7 depicts an exemplary data processing device or system which can be used to implement the embodiments.

## DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. Some of the following embodiments are discussed, for simplicity, with regard to the terminology and structure associated with examples of seismic acquisition systems. However, the embodiments to be discussed next are not limited to these configurations, but may be extended to other arrangements.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification does not necessarily refer to the same embodiment. Further, the particular features, structures or characteristics may be combined in any suitable manner in one or more embodiments.

According to various embodiments described herein, methods and systems for indicating the sensitivity to positioning of seismic sources and/or receivers in different locations within a survey area are presented. According to one embodiment, ray tracing is performed using a velocity model of the survey from the depth target to the acquisition surface, and perturbations introduced to compare shifts in emerging positions and travel times. Sensitivity is then mapped at the surface, characterizing the lateral geological variability of the overburden and reservoir horizon. According to another embodiment, lateral shifts between calculated midpoints and reflection points can be determined and used as an indicator of the positioning sensitivity. In either embodiment, the resulting sensitivity indicators can be mapped across the survey area to display, e.g., to the system operators, the relative sensitivity to positioning of the equipment across the geographical area of interest.

Such maps provide complementary qualitative-to-quantitative insights for 4D navigation and survey planning. For example, they enable one skilled in the art to locate areas within the overall survey area where positioning accuracy is most important in terms of seismic impact and other areas where positioning accuracy may be relaxed, e.g., in the presence of strong currents. Such methods and systems can also, for example, be used to improve the speed with which a seismic survey can be completed without reducing the quality of the resultant seismic images.

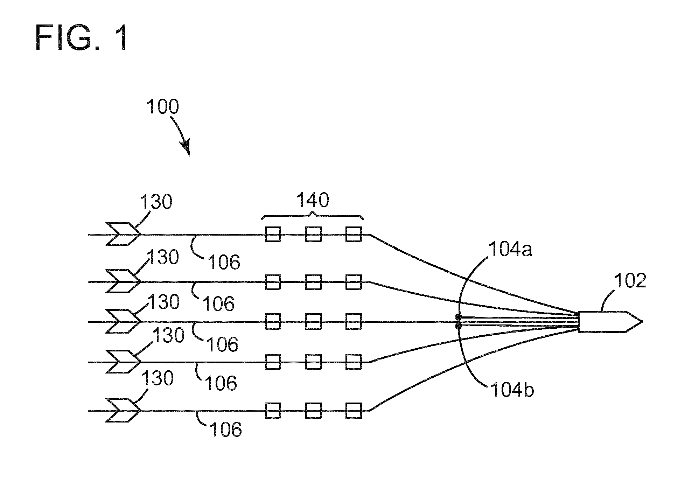

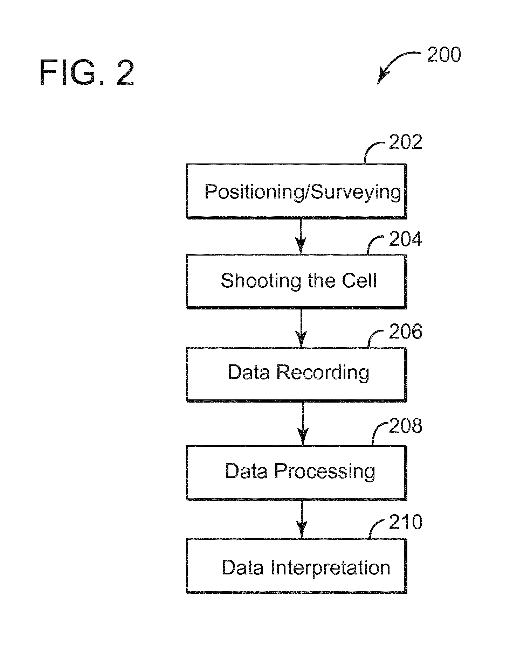

In order to provide some context for the subsequent exemplary embodiments related to positioning sensitivity indication, consider first a seismic data acquisition process and system as will now be described with respect to Figures 1 and 2. In Figure 1, a data acquisition system 100 includes a ship 102 towing plural streamers 106 that may extend over kilometers behind ship 102. Each of the streamers 106 can include one or more birds 130 that maintains streamer 106 in a known fixed position relative to other streamers 106, and the birds 130 are capable of moving streamer 106 as desired according to bi-directional communications birds 130 can receive from ship 102.

One or more source arrays 104a,b may be also towed by ship 102 or another ship (not shown) for generating seismic waves. Source arrays 104a,b can be placed either in front of or behind receivers 140, or both behind and in front of receivers 140. The seismic waves generated by source arrays 104a,b propagate downward, reflect off of, and penetrate the seafloor, wherein the refracted waves eventually are reflected by one or more reflecting structures (not shown in Figure 1) back to the surface. The reflected seismic waves propagate upwardly and are detected by receivers 140 provided on streamers 106. This process is generally referred to as "shooting" a particular seafloor area, and the seafloor area can be referred to as a "cell," or geographical area of interest (GAI).

Acquisition system 100 is typically used as part of a larger overall process to image a subsurface as part of an exploration for hydrocarbons. Figure 2 illustrates such a general method 200 for seismic exploration. There are five main steps: a detailed discussion of any one of the process steps would far exceed the scope of this document, but a general overview of the process should aid in understanding where the different aspects of the embodiments can be used. Step 202 involves positioning and surveying of the potential site for seismic exploration, i.e., to ensure that the correct area is being imaged and to establish pre-plot navigation lines as part of this exercise.

In step 204, seismic signals are transmitted to perform the shooting of the cell described above in the Background section. In step 206, data recording occurs. In a first part of this step, receivers 140 receive and most often digitize the data, and in a second part of the step 206, the data is transferred to a recording station. In step 208, data processing occurs. Data processing generally involves enormous amounts of computer processing resources, including the storage of vast amounts of data, multiple processors or computers running in parallel. Among other things, the data processing 208 can involve the processing described below to generate sensitivity indicators associated with positioning. Finally, in step 210, data interpretation occurs and results can be displayed, sometimes in two-dimensional form, more often now in three dimensional form. Four dimensional data presentations (a 3D plot or graph, over time (the fourth dimension) are also possible, when needed to track the effects of other processes, for example.

With this context in mind, consider now an embodiment for indicating the sensitivity to positioning (or, stated reciprocally, to mispositioning). As mentioned above, in this context, the term "positioning" refers to how close the acquisition equipment (i.e., the sources and receivers) are to their desired geographical positions for that equipment when a shot is fired. In the context of 4D surveys, the desired geographical positions for the monitor survey the position can be the positions at which the equipment was located when the corresponding shot was fired in the baseline survey. In terms of 3D surveys, the desired geographical positions may relate to those equipment positions associated with pre-plot navigation lines. The sensitivity indications according to these embodiments reflect the geophysical impact, for example in terms of reservoir illumination, of a surface positioning mismatch. This relationship between the geophysical impact and surface positioning mismatches is dependent on the shot location if the subsurface being imaged carries lateral heterogeneity. Therefore, the sensitivity indications derived by these embodiments can also be expressed one or more spatial maps of geological lateral variability.

Accordingly, presented in one embodiment is a method to quantify the spatially-dependent sensitivity of equipment positioning from the analysis of a velocity model. As will be appreciated by those skilled in the art, a velocity model provides information regarding the velocity at which the elastic waves generated by the source(s) travel through the various layers associated with the subsurface being imaged, and is used in a number of different data processing techniques used in seismic exploration. This embodiment relies on a target-oriented approach where seismic impact is evaluated based on specular events and features. Ray tracing is performed from the depth target, i.e., reservoir horizon, to the acquisition surface for the purpose of comparing respective shifts in positions and travel times as part of the determination of the sensitivity to positioning for a portion of the survey area.

Initially note that, to perform sensitivity analysis on a locality within the survey area according to this embodiment, the reservoir horizon is gridded into sampling study points, i.e., illumination reflection points (wherein "R" is used herein to denote such a reflection point) on which the sensitivity analysis will be performed to determine one or more local sensitivity indicators. To perform the sensitivity analysis according to this embodiment, permissible tolerances to position mismatch are established. As one example of such permissible tolerances, in the context of 4D seismic surveys, surface positioning mismatch on a monitor survey should not impact imaging features of R within the processing resolution, as compared to a baseline survey image.

The selected sensitivity criterion, e.g., having no impact on the imaging features of R within the processing resolution, can be analyzed for a given reflection angle "$\theta$" (or, equivalently, a given offset class) within a processing extent range "$\Delta\theta$". It should be noted that, in this embodiment for the sake of simplicity, the method is presented for virtual zero-incidence, i.e., small offsets class, and full azimuth analysis, but as will be appreciated by those skilled in the art may be carried out for different offset and azimuth classes.

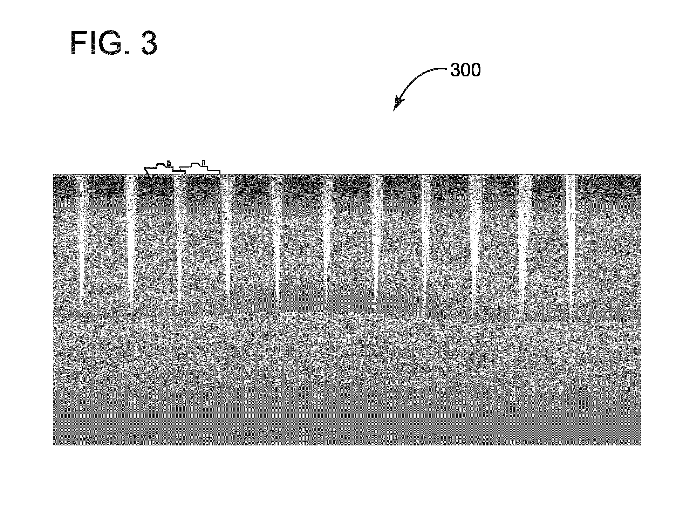

As an initial step in determining the amount of mismatch which is permissible under such a criterion, target-to-surface ray tracing is performed, for example, departing from a location R, a specular ray (which is a normal ray when $\theta = 0$) is traced, emerging to the surface at the specular trace position $\xi_{spec}$ with double travel time $\tau_{spec}$. To address all of the reflections from that reflection point R, a plurality of N regularly sampled rays within the $\Delta\theta$ aperture, for all azimuths, are traced, emerging to the surface at trace positions $\xi_i$ with double travel time $\tau_i$. Figure 3 illustrates an example 300 of ray tracing for normal incidence reflection, with $\Delta\theta = 5°$ in this example for all azimuths combined. Those skilled in the art will appreciate that there are many different types of, and algorithms for, ray tracing that are available to estimate the possible paths that the specular ray may take from a source to a reflection point in the subsurface being imaged and then on to a receiver.

Using the results of this ray tracing, the emerging positions at the surface and associated travel times of the rays are analyzed with respect to their specular counter-parts to find the limits of a reverse Fresnel zone. As will be appreciated by those skilled in the art, Fresnel zones are volumes in a radiation pattern where reflections will be mostly in phase or mostly out of phase with primary waves traveling between a transmitter and a receiver, and can be calculated using techniques which will be known to those skilled in the art. According to this embodiment all of the rays emerging within given spatial limits defined by the width of the reverse Fresnel zone and, optionally, other additional conditions (such as a selection of rays corresponding to travel times providing a constructive imaging of the reflection point R within processing resolution) are selected. Alternatively, or additionally, another selection condition for the rays could be to select all of the rays emerging within, but at the inner border, of the Fresnel zone, e.g., from a condition such as:

$$T/4 - \varepsilon \; < \Delta\tau_i < T/4 \tag{1}$$

with $\Delta\tau_i$ equal to $\tau_i - \tau_{spec}$, T being equal to the time period of the seismic signal dominant (or maximal) frequency and $\varepsilon$ equal to the thickness of the zone boundary.

The selected rays enable a selection of corresponding trace positions $\xi_i$ which define the spatial limits of the Fresnel zone. From this, a representative spatial extent of this zone can be defined, e.g., from an average distance to the specular position:

$$D = \Sigma \, | \, \xi_i - \xi_{spec} \, | \tag{2}$$

where the summation is performed over all $\xi_i$ satisfying condition (1). It should be noted that the distance D provides a first order of magnitude of the reverse spatial Fresnel zone associated with reflection point R.

Distance D can then be used to generate a sensitivity indicator associated with point R based on the following considerations. In this context, all traces with positions that are shifted less than D, with respect to the specular trace position, will hit the target bin R within the same reflection angle class. (As will be appreciated by those skilled in the art, these traces are no longer specular but still contribute constructively to the imaging of R, based on their travel times belonging to a Fresnel time window.) Accordingly, from a processing standpoint, a shift in surface positions of the equipment smaller than D will not significantly impact the imaging of reflection point R, when compared to imaging from the reference specular position.

The foregoing refers to sensitivity indicator processing for a single reflection point R. This can be expanded to apply to all sampling points R of the gridded horizon to generate a sensitivity indication map. For each reflection point in the embodiment, distance D can be color-mapped (i.e., different colors representing different distances or ranges of distance D) or grey-scale mapped at specular position $\xi_{spec}$, resulting in a sparse sampling of permissible surface shifts or mis-positionings. If the sampling is too sparse, a spatial interpolation of the samples can be performed to obtain a smooth and continuous color map at the surface.

Sensitivity indication maps generated by way of this embodiment provide both qualitative and quantitative insights into the tolerance on positioning mismatch depending on the vessel position and offset class. Such techniques can be applied for different offset classes and/or can be restricted to azimuth classes of a limited extent for more severe quality criterion.

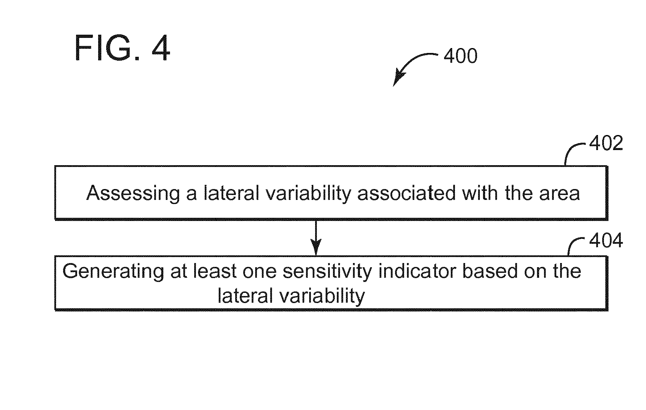

Such embodiments can also be expressed as methods. For example, a rather general method for generating at least one sensitivity indicator associated with an impact on a seismic survey of a positioning mismatch in an area is illustrated in Figure 4. Therein a lateral variability associated with the area being surveyed is assessed or determined at step 402. The at least one sensitivity indicator can then be generated based on the lateral variability at step 404.

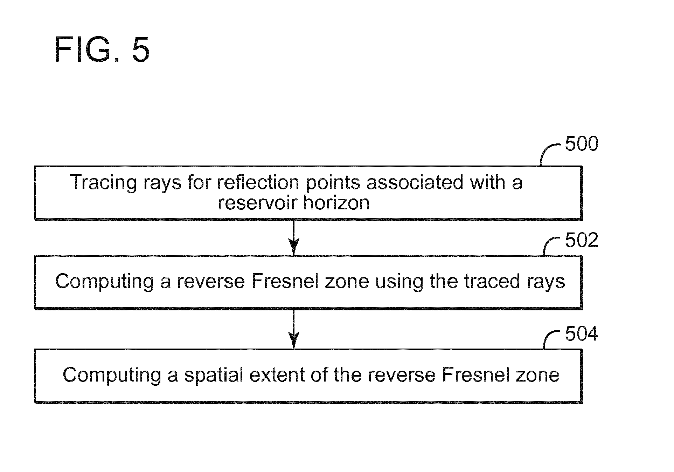

Steps 402 and 404 can be performed in various ways, including those described above, according to different embodiments. For example, step 402, i.e., of assessing the lateral variability can be performed by the steps shown in Figure 5, i.e., tracing rays for reflection points associated with a reservoir horizon at step 500, computing a reverse Fresnel zone using the traced rays at step 502 and computing a spatial extent of the reverse Fresnel zone at step 504. The spatial extent of the reverse Fresnel zone can be used to generate the sensitivity indicator either directly (i.e., by outputting or mapping the distance D) or indirectly (i.e., by further processing the distance D relative to one or more sensitivity criteria) to perform step 504.

However, steps 402 and 404 can be performed in other ways according to other embodiments. For example, according to another embodiment, lateral variability can be assessed based on the calculation of illumination hits on a seismic target (reservoir horizon). The lateral shifts obtained between midpoint and depth reflection points provide an indication of the lateral complexity of the overburden, from the surface down to the reservoir level.

To better understand the relationship between lateral variability and shifts between midpoints and depth reflection points, consider a given shot location associated with a seismic survey. The shot midpoint imprint is defined as the set of midpoint positions Mj associated to the receivers from the whole spread of receivers or from a partial spread of receivers (e.g., limited in offset-class). Reflection points Xi on the target (reservoir horizon) are also determined for each receiver. Knowing the velocity model, this reflection point determination can be achieved using Fermat's principle and stationary phase analysis. Various methods can be used, such as iterative shooting or bending two-point ray tracing or optimization from travel time maps provided by any modeler, as will be appreciated by those skilled in the art. The shot illumination imprint is defined as the set of reflection points Xj on the target.

When the subsurface is laterally invariant, Mj and Xj are the same for a flat target horizon. As a first approximation the spatial shift between the midpoint and reflection point varies proportionally with the subsurface lateral variability of the velocity (accumulating the overburden and reservoir lateral heterogeneities). When accounting now for the seismic dips, the spatial shift between the midpoint and reflection point varies also largely with the geometry of the considered horizon. Even when the subsurface is laterally invariant, Mj and Xj are not at the same horizontal position.

Consider now a given shot point and the corresponding gather of traces recorded for each hydrophone carried by the seismic streamers in a marine seismic acquisition system. Among all the traces recorded for this current shot, only the traces having offsets belonging to a certain offset class may be selected for processing to determine the lateral variation using this technique. For example, the selected traces may belong to the near offset class only. Alternatively, the recorded traces belonging to some or all of the cables of the seismic spread may be selected, e.g., traces associated with only the inner streamer cables 106.

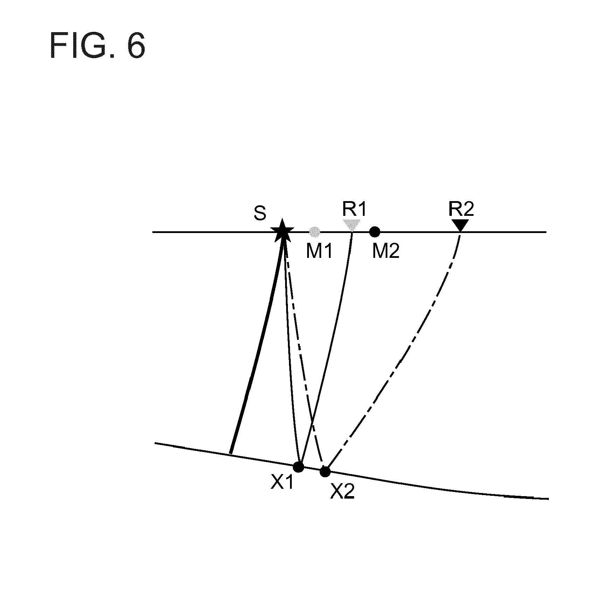

Given a set of selected traces, consider now pairs of neighboring traces. In this context, "neighboring" refers to receiver hydrophone positions. For example neighboring traces could be those collected by hydrophones which are next to one another on a streamer cable.. As shown in Figure 6, for a given pair of neighbor traces associated with one source and two receivers, i.e., {S, R1} and {S, R2}, the corresponding midpoints positions M1 and M2 can be computed and also the corresponding pseudo reflection points X1 and X2. Knowing these points, the horizontal distances D(X1 ,M1) and D(X2, M2) of the shift, and/or parameters which uses these horizontal distances, such as the ratio D(X1, M1) over D(X2, M2), are computed. This ratio characterizes the sensitivity of the displacement of the reflection point at the target depth to a perturbation of the positioning at the surface (here referring to the receiver perturbation only), for the current offset and the current shotpoint location. For a flat target horizon and a laterally invariant velocity model, this ratio tends to the unity.

According to an embodiment, a mispositioning or positioning sensitivity indicator can be derived locally, for each sampled vessel position, from shifts between midpoints and reflection point positions within the selected spread portions, e.g., in the manner described above. Various sensitivity indicators can be defined based on these shifts, the simplest one being a summation of shifts (or ratios of shifts) for several pairs of traces of a given shot gather, for example expressed as:

$$S = \sum_i^{NP} \frac{1}{C} \frac{||\mathbf{Mi} - \mathbf{Xi}||_h}{||\mathbf{Mj} - \mathbf{Xj}||_h} \tag{3}$$

where j≠i,
Mi is the midpoint,
Xi is the reflection point,
$||.||_h$: isthe horizontal distance operator,
NP is the number of pairs of traces Ti and Tj which were selected , and
C is a normalization coefficient.

Alternatively, or additionally, other calibrated criteria may be considered for better differentiation of the calculated sensitivity indicators between sampled shot positions. For example, each local sensitivity indicator is naturally mapped at the vessel's position for each shot (source position being constant for each pair of the shotpoint). It is useful that the sensitivity indicators are related to the vessel position to assist in survey planning and decision support during the seismic acquisition. A smooth and continuous sensitivity map is then obtained from interpolation of the sensitivity indicators, as described above with respect to the previous embodiment. In this case, only relative sensitivity (depending on vessel position) is to be interpreted for a qualitative characterization of lateral variability over the navigation area. One advantage of this embodiment is that it may re-use other information which has already been gathered for other acquisition repeatability quality control and seismic data processing purposes which is performed in the common shot point gather, e.g., midpoint vs. reflection point mismatch data which is used for shot illumination quality control.

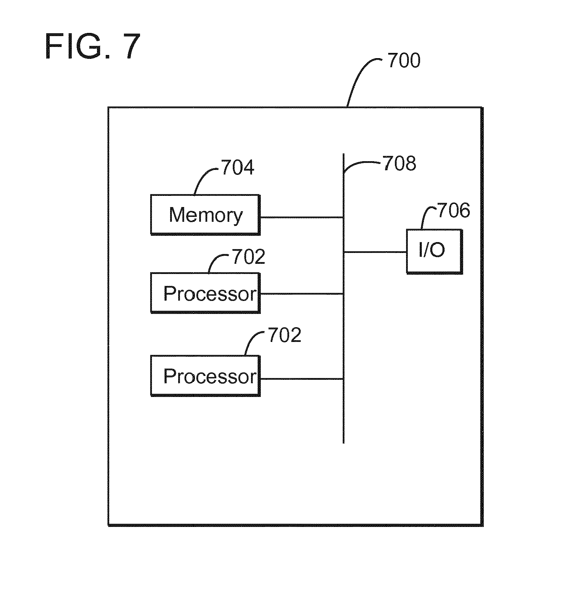

The computing device(s) or system involved in predicting the impact of a positioning mismatch on a seismic image associated with a reservoir horizon as set forth in the above described embodiments may be any type of computing device capable of processing and communicating seismic data associated with a seismic survey. An example of a representative computing system capable of carrying out operations in accordance with these embodiments is very generally illustrated in Figure 7. System 700 includes, among other items, one or more processors 702, a memory device 704, and an input/output (I/O) unit 706, all of which are interconnected by bus 708.

System 700 can be used to implement the methods described above associated with predicting the impact of a positioning mismatch on a seismic image associated with a reservoir horizon. Hardware, firmware, software or a combination thereof may be used to perform the various steps and operations described herein. It should be noted in the embodiments described herein that these techniques can be applied in either an "offline", e.g., at a land-based data processing center or an "online" manner, i.e., in near real time while onboard the seismic vessel. For example, predicting the impact of a 4D positioning mismatch on a seismic image associated with a reservoir horizon can occur as the seismic data is recorded onboard the seismic vessel. In this case, it is possible for the prediction to be generated as a measure of the quality of the sampling run.

Among other things the embodiments provide for complementary qualitative-to-quantitative insights for 4D navigation and survey planning. An analysis of the velocity model is carried out to enable the identification of areas where positioning accuracy is most critical in terms of seismic impact and, alternatively, areas where positioning accuracy can be relaxed, e.g., in the presence of strong currents. Such information can be used in survey planning to help decide which line should preferably be shot (or re-shot in case of in-fills) according to sea conditions forecasts for optimum repeatability. Because time-lapse acquisitions are dedicated to the reservoir, a target-oriented approach is developed by these embodiments to focus on the features which contribute the most to the reservoir imaging. Using these embodiments, seismic sensitivity is locally evaluated based on the impact of mis-positioning on reflective events at the reservoir.

It should be understood that this description is not intended to limit the invention. On the contrary, the embodiments are intended to cover alternatives, modifications and equivalents, which are included in the spirit and scope of the invention. Further, in the detailed description of the exemplary embodiments, numerous specific details are set forth in order to provide a comprehensive understanding of the invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein. The methods or flow charts provided in the present application may be implemented in a computer program, software, or firmware tangibly embodied in a computer-readable storage medium for execution by a general purpose computer or a processor.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

**Claims**

1. A method for generating at least one sensitivity indicator associated with an impact on a seismic survey of a positioning mismatch in an area, the method comprising:

   assessing (402) a lateral variability associated with the area; and
   generating (404) the at least one sensitivity indicator based on the lateral variability.

2. The method of claim 1, wherein a plurality of sensitivity indicators are generated, each of which is associated with a different portion of the area, and further comprising:

   mapping the plurality of sensitivity indicators across the area to indicate geographical sensitivities to said positioning mismatch.

3. The method of claim 1, further comprising:

   using the at least one sensitivity indicator to derive qualitative-to-quantitative information in support of seismic survey planning.

4. The method of claim 1, wherein said positioning mismatch is a difference between an intended geographical positioning of seismic sources and/or receivers and an actual geographical positioning of said seismic sources and/or receivers.

5. The method of claim 1, wherein the step of assessing the lateral variability further comprises the steps of:

   tracing rays for reflection points associated with a reservoir horizon;
   computing a reverse Fresnel zone using the traced rays; and
   computing a spatial extent of said reverse Fresnel zone.

6. The method of claim 5, wherein spatial limits of said traced rays associated with said reverse Fresnel zone are bounded by the traveltime condition that these rays must remain within constructive interference

7. The method of claim 6, wherein the spatial extent of said Fresnel zone is equal to $\sum |\xi_i - \xi_{spec}|$, where $\xi_{spec}$ is a specular trace position and $\xi_i$ is a trace position of one of N regularly sampled rays.

8. The method of claim 1, wherein the step of assessing the lateral variability further comprises the steps of determining a lateral shift between midpoints and corresponding reflection points as an estimate of the lateral variability.

9. The method of claim 8, wherein the step of generating the at least one sensitivity indicator based on the lateral variability further comprises:

   calculating a sensitivity indicator as:

$$ S = \sum_i^{NP} \frac{1}{C} \frac{|| \mathbf{Mi} - \mathbf{Xi} ||_h}{|| \mathbf{Mj} - \mathbf{Xj} ||_h} $$

   where $j \neq i$,
   Mi is the midpoint,
   Xi is the reflection point,
   $||.||_h$: is the horizontal distance operator,
   NP is the number of pairs of traces Ti and Tj which were selected, and
   C is a normalization coefficient.

10. A system for generating at least one sensitivity indicator associated with an impact on a seismic survey of a positioning mismatch in an area, the system comprising:

    at least one processor (702) configured to assess a lateral variability (402) associated with the area and to generate (404) the at least one sensitivity indicator based on the lateral variability.

11. The system of claim 10, wherein a plurality of sensitivity indicators are generated by the at least one processor, each of which is associated with a different portion of the area.

12. The system of claim 11, wherein the at least one processor is further configured to generate the plurality of sensitivity indicators by mapping the plurality of sensitivity indicators across the area to indicate geographical sensitivities to said positioning mismatch.

13. The system of claim 10, wherein said positioning mismatch is a difference between an intended geographical positioning of seismic sources and/or receivers and an actual geographical positioning of said seismic sources and/or receivers.

14. The system of claim 10, wherein the at least one processor is further configured to assess the lateral variability by:

tracing rays for reflection points associated with a reservoir horizon;
computing a reverse Fresnel zone using the traced rays; and
computing a spatial extent of said reverse Fresnel zone.

15. A method for generating a map associated with an impact on a seismic survey of positioning mismatches in an area, the method comprising:

assessing (402) a lateral variability associated with the area;
generating (404) a plurality of sensitivity indicators based on the lateral variability, each of which is associated with a different portion of the area; and
mapping the plurality of sensitivity indicators across the area to indicate geographical sensitivities to positioning mismatches.

# FIG. 1

# FIG. 2

200

202

Positioning/Surveying

204

Shooting the Cell

206

Data Recording

208

Data Processing

210

Data Interpretation

FIG. 3

FIG. 4 ⌐400

┌─402
Assessing a lateral variability associated with the area

┌─404
Generating at least one sensitivity indicator based on the lateral variability

FIG. 5

```
                                                              ┌─ 500
┌─────────────────────────────────────────────────────────────┐
│  Tracing rays for reflection points associated with a        │
│                    reservoir horizon                         │
└─────────────────────────────────────────────────────────────┘
                              │
                              ▼                        ┌─ 502
┌─────────────────────────────────────────────────────────────┐
│  Computing a reverse Fresnel zone using the traced rays      │
└─────────────────────────────────────────────────────────────┘
                              │
                              ▼                        ┌─ 504
┌─────────────────────────────────────────────────────────────┐
│  Computing a spatial extent of the reverse Fresnel zone      │
└─────────────────────────────────────────────────────────────┘
```

# FIG. 6

# FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61805268 A
- US 61807956 A